(19) **Europäisches Patentamt / European Patent Office / Office européen des brevets**

(11) **EP 2 040 042 B1**

(12) **EUROPEAN PATENT SPECIFICATION**

(45) Date of publication and mention
of the grant of the patent:
**13.05.2015 Bulletin 2015/20**

(51) Int Cl.:
*G01J 3/28* *(2006.01)*    *G01N 21/27* *(2006.01)*

(21) Application number: **07794046.8**

(22) Date of filing: **31.05.2007**

(86) International application number:
**PCT/RU2007/000317**

(87) International publication number:
**WO 2008/002192 (03.01.2008 Gazette 2008/01)**

(54) **METHOD FOR PRODUCING MULTIDIMENSIONAL CALIBRATING PATTERNS**

VERFAHREN ZUR HERSTELLUNG VON MEHRDIMENSIONALEN KALIBRATIONSMUSTERN

PROCÉDÉ DE CRÉATION DE MODÈLES DE GRADUATION MULTIDIMENSIONNELS

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.06.2006 RU 2006122456**

(43) Date of publication of application:
**25.03.2009 Bulletin 2009/13**

(73) Proprietors:
• **Zharinov, Konstantin Anatolyevich**
**St. Petersburg 198261 (RU)**
• **Luzanov, Pavel Aleksandrovich**
**St. Petersburg 195043 (RU)**

(72) Inventors:
• **Zharinov, Konstantin Anatolyevich**
**St. Petersburg 198261 (RU)**
• **Luzanov, Pavel Aleksandrovich**
**St. Petersburg 195043 (RU)**

(74) Representative: **Sloboshanin, Sergej et al**
**V. Füner, Ebbinghaus, Finck, Hano**
**Mariahilfplatz 3**
**81541 München (DE)**

(56) References cited:
WO-A2-02/25233    RU-C1- 2 266 523
US-A- 4 944 589    US-A- 5 459 677
US-B1- 6 615 151

• **DE NOORD ET AL: "Multivariate calibration standardization" CHEMOMETRICS AND INTELLIGENT LABORATORY SYSTEMS, ELSEVIER SCIENCE PUBLISHERS B.V. AMSTERDAM, NL LNKD- DOI:10.1016/0169-7439 (94)85037-2, vol. 25, no. 2, 1 November 1994 (1994-11-01), pages 85-97, XP026486546 ISSN: 0169-7439 [retrieved on 1994-11-01]**
• **YONGDONG WANG ET AL: "MULTIVARIATE INSTRUMENT STANDARDIZATION" ANALYTICAL CHEMISTRY, AMERICAN CHEMICAL SOCIETY, US LNKD- DOI: 10.1021/AC00023A016, vol. 63, no. 23, 1 December 1991 (1991-12-01), pages 2750-2756, XP000249569 ISSN: 0003-2700**
• **WANG Z ET AL: "Additive Background Correction in Multivariate Instrument Standardization" ANALYTICAL CHEMISTRY, AMERICAN CHEMICAL SOCIETY, US, vol. 67, no. 14, 15 July 1995 (1995-07-15) , pages 2379-2385, XP007914148 ISSN: 0003-2700**
• **WEHLBURG C M ET AL: "New hybrid algorithm for maintaining multivariate quantitative calibrations of a near-infrared spectrometer" APPLIED SPECTROSCOPY, THE SOCIETY FOR APPLIED SPECTROSCOPY. BALTIMORE, US, vol. 56, no. 5, 1 May 2002 (2002-05-01), pages 605-614, XP009132737 ISSN: 0003-7028**
• **FEUDALE R N ET AL: "Transfer of multivariate calibration models: a review" CHEMOMETRICS AND INTELLIGENT LABORATORY SYSTEMS, ELSEVIER SCIENCE PUBLISHERS B.V. AMSTERDAM, NL LNKD- DOI: 10.1016/S0169-7439(02)00085-0, vol. 64, no. 2, 28 November 2002 (2002-11-28), pages 181-192, XP004388757 ISSN: 0169-7439**

EP 2 040 042 B1

• **OSBORNE AND T FEARN B G: "Collaborative evaluation of universal calibrations for the measurement of protein and moisture in flour by near infrared reflectance" JOURNAL OF FOOD TECHNOLOGY, BLACKWELL SCIENTIFIC PUBLICATIONS, GB, vol. 18, 1 January 1983 (1983-01-01), pages 453-460, XP007914149 ISSN: 0022-1163**

## Description

The proposed invention relates to analytical instrument making, in particular, to methods of formation of calibration models for measuring devices of various kinds.

In many fields of industry and scientific research, the definition of sample properties by means of direct methods of measurement does not provide the required analysis speed or leads to the destruction of the sample, and in some cases the direct definition of the required properties in general can appear impossible. As an example, it is possible to refer to analytical chemistry where the traditional direct method of chemical analysis for the definition of concentrations forming the sample components is based on carrying out chemical reactions what leads to the destruction of the sample, and besides it is time consuming.

In similar cases, indirect methods became widespread, where the analyzed properties of samples are defined by measuring other properties of samples, depending on the analyzed ones, which, however, unlike the analyzed properties, can be easily measured directly during a short time interval and without the destruction of the sample. In addition, directly measured properties of samples are often called "primary properties", and the analyzed properties of samples are "secondary properties". One of the most effective indirect research methods is the spectroscopic analysis at which the required "secondary" properties of samples (for example, their chemical composition) is defined on the basis of the optical spectra of absorption, reflection or dispersion ("primary" properties) measurement.

After the measurement of a plurality of the primary properties, it is necessary to define the mathematical relationship linking the measurement results with values of parameters describing the analyzed secondary properties. These relationships between the primary characteristics measured on the device and the analyzed secondary properties of the sample are called calibrating models or calibrations; in the result of their finding, a number of calibrating constants is defined. The procedure, of formation of calibration models is rather labor consuming, long and expensive. This process becomes especially complicated in case of the multivariate analysis, when, for the quantitative characteristics of the sample secondary properties definition, a set of measurement results of a large number of parameters describing the primary properties is used. For example, in case of the spectroscopic analysis for the definition of concentration of various components a large quantity of spectral data (absorption, reflection or dispersion value) for different wave numbers (wavelengths, frequencies) is measured.

To provide a prescribed accuracy of definition of the parameters describing the analyzed secondary properties of any given sample, it is necessary to analyze a large number of samples, representative to those samples which will be analyzed on the device in the future (calibration set). The selection of calibration samples set is regulated by standards for various indirect methods of analysis, for example, the standard for qualitative analysis by means of NIR (near-infrared) spectroscopy [1]. The values of the parameters describing the analyzed secondary properties of the calibration samples set are preliminarily defined by means of standard methods named referential. When carrying out the referential analyses, it is necessary to pay special attention to the accuracy of the analyses results as the referential analysis accuracy limits the accuracy of all calibration. For example, in the case of the spectroscopic analysis of the chemical composition samples' considered earlier, the analyzed calibration set properties can be preliminarily determined by standard chemical methods by using chemical reactions.

The calibration set samples are chosen in such a way, that their secondary properties would cover a possible range alterations of these properties at the analysis of unknown samples, and would be distributed at regular intervals within this range. The implementation of the given conditions increase the stability of the calibration model, and owing to this fact low noise alterations in the measured primary properties do not lead to statistically significant changes in the secondary properties analysis results.

The formed calibration model should be exposed to the standard procedure of check named validation [1], in the result of which the statistical parameters describing the calibration model quality as well as the samples dropping out of calibration is defined. The statistical analysis of outliers is applied to find such samples, for example, by Mahalanobis distance [1], which uses the primary properties measurement data of the full calibration set. For the increase of calibration stability, it is necessary to exclude such samples from the calibration set.

To assess the applicability of the calibration models for the description of an unknown sample, the measured primary properties of the sample are also exposed to the analysis according to the outlier definition statistics. This problem is similar to the problems solved at the qualitative analysis, where, on the basis of measurement of the sample's primary properties (spectral data) and their comparison with the library data, the conclusion about the set of components in the sample is made. It is necessary to note, that the measurement conditions of the analyzed samples and the conditions of the calibration samples should be identical.

The measurement results of the samples' primary properties and, as a consequence, the accuracy of definition of the parameters describing the secondary properties of the analyzed samples, can be essentially affected by various properties, for example, changes of external conditions or measuring device characteristics. It is necessary to note, that the device characteristics can change in due course owing to ageing or at carrying out maintenance works, or at replacement of separate typical construction elements of the device. In that case, the formation of a new calibration model can be required considering the device current condition features. As it was noted earlier, this process is long, labor consuming and expensive. Therefore, several methods of formation of calibration models, steady to alteration of measurement conditions, or device characteristics and other properties affecting the results have been offered, they permit not to repeat a complex process of calibration model construction for each separate device after its repair, replacement of separate typical construction elements or change of device parameters in the course of time.

One similar method [3] considers the formation of the devices' calibration model for the spectroscopic analysis of a chemical composition, which is not sensitive to change of device's characteristics. The given approach was applied by T. Scecina and others, who based on the fact that the artificial addition to the calibration model of the spectra of the samples measured at the change of a particular affecting parameter (for example, temperature or pressure) over the expected change range in operation, improves the analysis with the use of a similar model of those samples, for which a change of the given parameter is characteristic. While applying the specified concept in relation to the changes of measuring device characteristics, an algorithm has been developed, which allows to consider similar changes. The specified method takes into account the variability of the spectral devices due to the inclusion into the spectra calibration model of the samples registered at changing certain parameters of the device to block the whole possible range of similar changes. This idea is practically identical to the method described in the patent [2]. For example, the wavelength displacement by a certain amount for all points in which measurements are being made is entered, or the amount of this displacement is proportional to the particular position point on the axis of the wave numbers. Also permitted is to consider similar changes by means of spectra mathematical processing.

On the other hand proposed is the opportunity of the considered algorithm modification, consisting in formation of calibration models on several devices it is preferable that these device characteristics covere the possible range of the specified characteristics change on all devices of the given series. Then the obtained data are unified in a uniform calibration set, and in addition to the changes of the device characteristics are artificially entered by means of mathematical manipulations with the spectral data. Such approach allows taking into account the variability of the parameters of the device to a greater extent, making the formed model steadier.

However, this method requires a large number of measurements what leads to an increase of work, time and material resources burden at the stage of formation of calibration models. The considered algorithm is not deprived of other drawbacks, namely, decrease of model accuracy since the model initially supposes variation of measurement results of primary properties , and the complexity of estimation of the legitimacy of the calibration model application for the analysis of this or that unknown sample that can lead to mistakes in the secondary properties analysis.

One more method, devoted to the formation of calibration models compensating the changes of the device parameters, is presented in [4]. According to this method, spectrometers are characterized by means of definition of their spectra (spectral characteristics) conformity to the preliminarily determined limited number of clusters. The belonging to a cluster is defined on the basis of the similarity of spectral features and performance data. The spectral features, used for classification, can be attributed to the known device's parameters or can represent some abstract characteristic features, received by means of computing methods. The calibration model for each cluster compensates the instrumental changes; it will be more simple and exact.

The presented algorithm includes four stages: measurement, classification, calibration, and definition of anormal samples. At the first stage, the measurement of spectra of certain standards, which can be used for example for classification of the observable displacement, observed within the wavelengths axis or by intensity. The kind of measured standards is defined by effects, which should be considered in each particular case. Generally, the device changes can be classified on the basis of the spectral data into the following kinds: signal intensity, bandwidth, wavelength changes or a combination of the specified phenomena. Their sufficiently detailed classification is given in the considered source. It is necessary to note, that in some cases real samples, modeling features of the measurement by means of the given device, can serve as standards. At the second stage, classifying of the received spectra is required. For this purpose characteristic spectral features are allocated with the use of mathematical transformations of the received data, which improve certain aspects, useful for interpretation for example the principal component analysis, Mahalanobis distance calculation. In addition, the given features can be received on the basis of the aprioristic knowledge of the system (noise characteristics, detector's linearity, etc.). Further the classification is executed, that is, attribution of the received spectra to certain clusters is made, and the classification model is developed by finding a law allowing to define, what cluster corresponds to the measured sample spectrum. At the third stage a calibration model for each cluster is built, this model takes into account changes of the device, typical for this cluster. Spectra inside a determined cluster have a high degree of internal constancy and possess similar features, defining not all possible changes of the device parameters, but only one or several considered inside the cluster. Such approach allows simplifying the procedure of the calibration formation for an individual cluster. Its other advantage is the opportunity of definition of anomalous spectra. As each cluster has its own set of classification requirements, if the measured spectrum does not comply with it, an attempt is made to pick up another cluster, which parameters allow conducting the specified spectrum analysis. If it appears impossible, the given spectrum is exposed to mathematical processing in order to make it to correspond to one of the clusters. If compliance is impossible to reach, the spectrum is considered as anomalous.

Actually, it is a modification of the method, described in the previous patents, with the introduction of changes into the characteristics of the devices at formation of the calibration model. The difference here is that not the whole possible range of changes is considered, but it is split into several sub ranges (clusters), in each of which for example, only one parameter is measured in the limited range of values. A calibration model is built, on the basis of which the secondary properties are defined with sufficiently high accuracy for all devices, which primary properties are characterized by that cluster. For the devices from another cluster (changing another parameter or the same parameter, but in another range of values) an independent calibration model is built or a calibration transfer by known methods is carried out.

Among the advantages of the given method are the simplicity of the calibration model and a sufficiently high accuracy of the definition of secondary properties for a particular cluster, as well as the possibility of definition of anomalous spectra, which allows to estimate the legitimacy of the calibration model application for this or that unknown sample analysis, and accordingly, allows to lower the probability of mistakes in the secondary properties analysis. Among its disadvantages is the necessity of a great number of operations to perform in connection with the clusters definition with finding of qualifying algorithms and definition of calibration models for each cluster, and also a narrow directivity of the offered method at spectrometer devices.

There is a method of transfer of calibration models between devices [5], which can be used for calibration of one device, to take into account changes in the device characteristics, occurred in service owing to various reasons, in particular ageing. According to the given method, a set of samples is chosen for the account of similar changes , for example, from those that were used for the formation of calibration models. Primary properties of each sample from this set are measured with the device, which characteristics have changed in the course of time, and comparison is carried out by means of regressive methods of measurement of the results of the primary properties of the set samples with the measurement results of the primary properties of the same samples, received on the device at the initial condition, for which the calibration was made. Thus, relationships are defined for transformation of measurement results, carried out on the initial device, to the form equivalent to measurements on the device in its current state, at which there were some changes in characteristics while in service. Later on, by means of the found relationships the data for the samples calibration set, measured on the initial device, will be transformed to the form equivalent to the measurement results of the calibration set samples on the device in the current state, and a calibration model is formed on these transformed data.

Formed by means of the given method, the calibration model takes into account changes, which took place in the device characteristics while in service, provides a sufficiently high accuracy of definition of the analyzed properties, in addition there is no necessity to repeat measurements on the device of all-calibration set samples, what reduces the duration and labor input of the graduation process. At measurement of an unknown sample, admitted is the opportunity of carrying out of the outlier data analysis by means of outlier prediction statistics, what allows estimating the legitimacy of application of the calibration model. For considering the effects of the interfering factors, such as distinctions in sample preparation and in the state of samples, it is proposed to use a normalization procedure with the use of various kinds of mathematical preprocessing of measurement results and data on the secondary properties (referent data)).

The essential drawback of the given invention is that the created calibration model takes into account only the current state of the device and its characteristics, as well as of other properties influencing the measurement results. Thus, in the course of time these properties can change again owing to various reasons, in particular ageing, maintenance works of the device, replacement of separate constructive elements and change of operational conditions. As a result, analysis errors in the formed calibration model may increase, and finally, there will be a necessity of a new calibration construction, that is, a recurrence of all operations, described above according to the given method even in case of repeated change of the same characteristics.

There is another method [2] of formation of multivariate calibration models, which are not sensitive to change of parameters of the device, on which the measurements are carried out, as well as to change of external conditions, at which the measurements are carried out, and to change of other properties of the sample. With regard to set of essential features, the given method is the closest to the proposed invention, and is chosen as the most pertinent prior art. According to the considered method of formation of calibration models the required quantity of calibration samples is chosen with the known secondary properties , so that other properties of samples would change in the greatest possible range of expected changes. Then, for each of the chosen calibration samples, a large number of parameters, describing the primary properties of the sample, is measured on the device, for which the calibration model is defined; after that a mathematical processing of the received results is carried out, and a number of calibration constants is defined in the relationships between the values describing the -primary and the secondary properties of the calibration samples. The peculiarity of the method consists in the fact that during the measurements for one or several samples from the calibration set intentional changes are made at least in one of the measuring parameters of the device, besides a change of external conditions may be additionally entered. The magnitude of the changes of specified parameters at the formation of a calibration model should be of the same order or greater than the expected magnitude of changes of these parameters between various devices while in service. The device parameters or other changes of measurement conditions can be also entered not during the process of real measurements, but by means of mathematical transformations. For example, in case of spectrometers based on a monochromator it is proposed to carry out a measurement of one or several samples used for calibration, having intentionally made a displacement of the wavelength in the range of values, which can be expected at operation. This can be achieved by changing the monochromator physically (depending on the construction one may use the displacement or a change of the inclination angle of the grating or the filter, change of the apertures position on the grating, or change of the falling radiation inclination) or by means of a change of constants used for calculation of the monochromator wavelengths.

The analysis results of the secondary properties of the sample received with the use of a multivariate calibration model formed according to the given method depend very slightly on the measurement conditions and the technical parameters of the measuring device. The intentional introduction of variability of data of the measurement results of the set of calibration samples increases the model stability, and the field of application becomes wider.

The given method is not deprived of drawbacks. First, it is necessary to note the decrease in the accuracy of analysis results when using a similar calibration model, what is caused by the initially prospective variation of measurement results of primary properties. The same circumstance complicates the estimation of calibration applicability for the analysis of this or that unknown sample. For example, if the calibration model for the definition of the percentage of various chemical components in a sample will be used for the analysis of an unknown sample consisting of other components and substantially differing from the calibration samples set, it will lead to mistakes in the definition of secondary properties. Besides, the formation of a mathematical model, insensitive to the effect of all factors influencing the measurement results, is not always possible, owing to the large number of similar factors. Therefore, the process of formation of a calibration model accounting the effect of a large number of additional factors demands carrying out of a huge number of measurements of calibration samples under various conditions, which increases even more the labor input and the duration of the procedure of calibration formation.

Document [7] addresses situations in which a multivariate calibration model may become invalid, for instance when an instrument is replaced, when drift in the instrument response occurs, when the measurement has to be taken at a different temperature, or when there is a change in the physical constitution of the sample. The document discloses methods of multivariate calibration standardization which enable to correct for the differences between between these situations and thereby eliminate the need for a full recalibration.

The problem of the present invention is the formation of a multivariate calibration model, which provides a high accuracy of definition of analyzed properties and is steady against changes of properties, affecting measurement results from a device, and even in case of repeated changes of similar factors, in particular, against possible linear and nonlinear discrepancies in technical parameters of the device, appearing owing to ageing, maintenance works or replacement of separate typical elements of the construction, change of operational conditions, and also other factors, thereby decreasing the labor input and the duration of the formation procedure of a similar model, subsequently applied for the definition of one or several secondary properties of the unknown sample by the results of measurement of the multiple primary properties of this sample, and not necessarily spectral ones.

The solution of the problem is achieved by a method as defined in appended claim 1. The method is based on the formation of multivariate calibration models, consisting of a sequence of actions unified by a common inventive idea. The method comprises selecting a calibration set of samples with known secondary properties defined by referential methods; measuring primary properties of each of the samples of the calibration set on the device; carrying out artificial alterations of at least one of the properties, affecting the measurement results from the device; measuring of the primary properties of at least one sample on the device in a state altered this way; forming a calibration model steady to the specified alterations by finding by means of multivariate regressive analysis methods with the use of the data received on the device after carrying out the alterations of calibration relationships, allowing to define the analyzed secondary properties of the unknown sample by measurement results of the set of primary properties of this sample, characterized by forming a limited sample set for calculation of correcting relationships before carrying out the alterations, measuring the primary properties of each sample from this set on the device before and after carrying out the alterations, and, defining the correcting relationships by means of comparing the measurement results of the primary properties of samples of the limited set, obtained on the device before carrying out the alterations with the measurement results of primary properties of the same samples obtained on the device in the state when the alterations are made, wherein this comparison is carried out by using methods of multivariate regression analysis; therefore, the correcting relationships, found in such a way for one device are used on any other device of the given type at formation of a calibration model steady against the specified alterations; transforming the measurement results of the primary properties of the samples of the calibration set by means of the obtained correcting relationships to a form corresponding to the form of measurements on the device after alterations; complementing the measurement results of the primary properties of the calibration samples being obtained on the device before the alterations to the primary properties measurement results of the samples of the calibration set being corrected to the altered state of the device as mentioned above, wherein a verification of the multivariate calibration model formed on the set of the initial and corrected measurement results of the primary properties of the samples of the calibration set is made by carrying out a validation procedure and using the quantitative parameters of the calibration validation defined on the basis of it.

The definition of correcting relationships based on the measurement of the representative set of samples which is formed according to the given method, allows to take into account nonlinear variations in the device characteristics caused by a change of properties affecting the measurement results, since several dependencies of the change of primary properties are used to find transformation relationships of the measurement results. In addition, there is no necessity to carry out a huge number of measurements of the samples of the calibration set under various conditions and it considerably reduces the labor input and the duration of the process of formation of the calibration model which is steady against changes of the factors affecting measurements results on the device according to the proposed algorithm.

Alterations are done in such a way, that it is possible to cover their possible range while the device is in service. Therefore, the formed calibration model will be steady even against repeated changes of the properties affecting the analysis results if their influence has been taken into account by the proposed calibration correction at the stage of its formation. This fact also is an essential advantage of the given method.

All measurement results of the calibration samples including the measurement results of the of the primary properties of samples of the calibration set supplementing the calibration set are transformed to a form equivalent to the measurement results on the device, when the alterations are carried out at least for one property of those affecting the measurement results, they are stored in a computer of the given calibrated device. This provides independence of the formed model from the measurements on the device in the initial state and allows to estimate the legitimacy of the calibration application for the analysis of an unknown sample on the device in the state when one or several properties, affecting the measurement results have changed, and also allows to define the outlier data by means of the outlier, prediction statistics, what guarantees a high accuracy of the definition of the analyzed secondary properties.

For the estimation of analysis accuracy of secondary properties of unknown samples of a calculated calibration model, its verification (validation) is carried out at the final stage. The given procedure is carried out by a comparison of the secondary properties of the samples determined by the given calibration on the basis of the measurement results on the device with the direct measurement results of the secondary properties obtained by using referential methods.

**[0030]** , The use of the outlier prediction statistics and the elimination from the model of significantly deviating samples (outliers) of the calibration set before the definition of the calibration relationships increases the stability of the formed calibration model

For the transformation of the measurement results and of the referential data to the optimal form it is possible to use the procedure of normalization. It allows to minimize definition errors of the analyzed secondary properties and to take into account technical features of the measuring device as well as the difference between a sample preparation and the investigated sample state. The procedure of normalization represents a selection of different methods of mathematical preprocessing. The criterion of selection is the accuracy of the analysis of the secondary properties of the samples, which is provided by the device with calibration at which forming the given kind of mathematical preprocessing was used. As basic quantitative criteria one uses quantitative parameters of the validation procedure of the calibration model (for example, a standard validation error) [1].

The obtained correcting relationships, considering a certain variant of properties alterations affecting the measurements results of the device are proposed to be used aiming to compensate such alterations at calibration formation and for any other devices of the given type using the proposed algorithm.

The essence of the invention consists in the fact that the proposed set of features allows to form a multivariate calibration model on the calibrated measuring device steady against possible variations of properties affecting the instrument measurement results, in particular against changes of the technical parameters of the device occurring owing to ageing, maintenance works or replacement of separate typical elements of the construction, as well as against factors of service conditions, even in case of numerous changes of the specified factors, in addition, the labor input and the duration of the formation procedure of the similar model decreases in comparison with the existing known methods. The created calibration model gives an opportunity with high accuracy to predict secondary properties of unknown samples by measurement results of a set of primary properties, not necessarily spectroscopic, wherein the calibration model is constructed on the basis of data on the primary properties from samples of a calibration set, measured on the calibrated device, and the same data transformed to a form as if the measurements were carried out on the device, when some alterations had been made at least in one of the properties, affecting the measurement results on the device, for example, corresponding maximal expected changes during operation for devices of the given type. The correcting relationships, that allow to transform the measurement results of the calibration samples to a form equivalent to the measurement results in the device in the altered state are defined from the representative -set of samples measurement on the device before and after the alteration, wherein the set for the correcting relationships calculation consists of a much smaller number of samples than the calibration one. Samples from the set for the correcting relationships calculation provide essential distinctions in the measurement results in the range or all primary properties on the device, both in the initial and in the altered state. The use of the samples set for calculation of the correcting relationships allows to define the nonlinear correlation between the measurement results of the same samples on the device before and after the alteration by the correlation analysis with the use of regression methods. The obtained correcting relationships, taking into account a certain variant of alterations of at least one factor affecting the measurement results on the device are proposed to be used when forming the calibration models with the purpose of compensation of such alterations and for any other device of the given type. Thus, there is the opportunity of calibration formation for any other device which calibration is steady against variations of differences of technical parameters of the calibrated device occurring owing to ageing, maintenance works or replacement of separate typical elements of the construction, against service conditions changes, as well as other properties affecting the measurement results from the device using the correcting relationships calculated only for one device on the basis of the proposed algorithm, what in an even greater extent simplifies the process of formation of a calibration model. As at formation of calibration models a set of the measurement results of the primary properties of the samples of the calibration set obtained on the device in the initial state, and also reduced to the kind of the device when at least one property affecting the measurement results is altered, it is possible to estimate the legitimacy of the applicability of the formed calibration for the analysis of an unknown sample using statistical methods of outlier data analysis, for example, from Mahalanobis distance. The normalization procedure performance with the use of various kinds of mathematical preprocessing of the measurements results and the data on the secondary properties (referential data) allow to provide minimal errors of the definition of the analyzed secondary properties, thus defining the optimal calibration relationships for the given conditions.

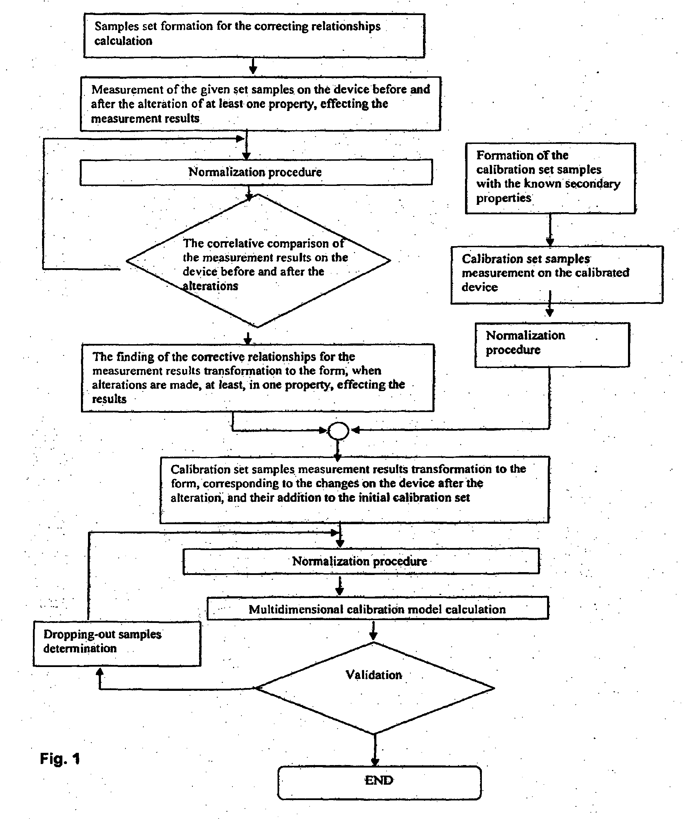

The proposed invention is explained in Fig.1, which shows a schematic image of the proposed method in a form of a flow-oriented diagram.

The proposed method of formation of multivariate calibration models can be used for any devices, where the analyzed properties of the samples are defined on the basis of repeated measurement of other properties, in particular, in spectrophotometry for various kinds of spectrometers measuring absorption of light radiation by a sample on an array of different wavelengths. The data describing such measurement result are referred to as spectrum. We shall consider the application of the proposed method for an example of spectrometers for an analysis of chemical composition of a sample, having noticed however once again that the scope of the declared method is not limited to spectroscopy.

The spectrometer, as any other analytical device, requires a preliminary calibration, defining the interrelation between the analyzed properties of the sample and the spectral characteristics. We shall note, that frequently the analyzed properties of a sample are not compared directly with the measurement results but with spectral data which have already passed the normalization procedure (preliminary mathematical preprocessing). In this way, for example, smoothing of spectra, subtraction of a base line or differentiation can be carried out. The type of the preliminary mathematical processing is selected based on the criterion of a maximal accuracy of definition of the analyzed secondary properties and minimizing the influence of collateral factors, connected with parasitic dispersion and features of sample preparation. The same mathematical preprocessing is applied to all spectra of the samples of the calibration set after carrying out the normalization procedure, the transformed spectral data have strongly pronounced characteristic features even at minor alterations of the analyzed properties [6]. Various statistical characteristics, for examplethe standard calibration error (SEC), the standard validation error (SEV), and the standard cross-validation error (SECV) [1] are used as criteria for the estimation of the calibration models quality. The most widespread kind of mathematical preprocessing for the spectral analysis is the determination of average weight values [6] of the spectral data, which reduces by one a number freedom degrees in the calibration model. In the given preprocessing, a spectrum averaged over all calibration set is found and then subtracted from each calibration sampled spectrum. Similarly, the average weight values of the referential data are determined. Then, during the analysis of the unknown sample before applying the formed calibration model the spectrum averaged over the calibration set is subtracted from the measured spectrum.

The set of samples representative to those samples which will be analyzed further on is selected for carrying out the calibration. To select the calibration samples for the spectral analysis the following criteria [1] are used: a) samples have to contain all chemical components which are planned to be analyzed; b) the range of concentration variations of the analyzed components in the samples of the calibration set should exceed the range of variation in the analyzed unknown samples; c) variation values in the concentration of chemical components from sample to sample have to be distributed at regular intervals within all ranges of variation; d) the number of samples should provide the determination by means of statistical methods of mathematical relationships between the spectroscopic data and the concentration of separate chemical components. The samples significantly deviating from the calibration set are defined by means of the outlier statistical analysis, for example, by calculation of Mahalanobis distance [1] which is defined as:

$$D^2 = r'(R \cdot R')^+ r \tag{1}$$

where R is the matrix of spectral data of a full calibration set, r is a vector corresponding to the spectrum of one sample. Mahalanobis distance shows how many degrees of freedom the given sample brings into the calibration model. On average, every calibration sample should bring in k/m, where k is the number of variables in the regression, m is the number of samples in the calibration set. Samples with $D^2 > 3k/m$ should be excluded from the calibration set. A large value of Mahalanobis distance means that the spectrum of the given sample almost completely determines one of the regression factors what makes the model unstable. This can occur when the uniformity of distribution of the analyzed properties of the calibration samples within the range in which they vary, is disturbed, i.e. when the composition of the sample essentially differs from other samples in the calibration set. Samples which analyzed properties values determined by means of the formed model, significantly deviate from the values obtained by the referential method have to be excluded from the calibration set. The given samples are determined from the Student divergences calculated by the formula:

$$t_i = \frac{e_i}{SEC\sqrt{1 - D_i^2}} \qquad (2)$$

Here $e_i$ is the difference received by means of the calibration model of the concentration of the chemical component value or the analyzed property from the referential value for i-th calibration sample, SEC is the standard calibration error [1], $D_i^2$ is Mahalanobis distance for i-th calibration sample. Student divergences should be distributed at regular intervals under the normal law. The value of divergence is compared with the Student factor for the confidence probability of 0,95 and numbers of degrees of freedom m-k. In case if the value of the divergence exceeds the factor the sample is excluded from the calibration set.

The analyzed properties of the calibration samples should be known in advance or are to be determined by means of referential methods. The obtained numerical values are considered as real values of the analyzed properties, therefore the referential analysis accuracy determines the accuracy of all calibration, and rather high demands are made to this procedure. It is possible to increase the referential analysis accuracy by carrying out a repeated recurrence of analyses with the subsequent averaging of the results.

The spectra of the set of calibration samples are registered on the device, and then a multivariate calibration model can be formed. For these purpose multivariate mathematical methods, such as the principal components analysis (PCA), the partial least squares procedure (PLS), etc. are used. Further, measuring a spectrum of the unknown sample on the given device and using the formed calibration model, it is possible to determine the analyzed properties, for example, the chemical composition. The accuracy of similar measurements will be sufficiently high until the properties affecting the measurement results of the device remain constant. However, as it was already mentioned earlier, while, for example, in operation or at carrying out maintenance works or replacements of separate typical elements of the construction, characteristics of the device can change, what in turn can cause a decrease in accuracy of predictions and a necessity of formation of a new calibration model. Hence, for the sufficient accuracy maintenance of a prediction of the unknown samples propertiesn on the device under the condition of possible repeated alterations of factors affecting the measurement results it is necessary to have a calibration model steady against distinctions in the device characteristics, against variations of operation conditions and against other properties affecting the measurement results from the device, in addition providing the prescribed accuracy of the analysis, allowing to estimate the model applicability to the analysis of the unknown sample, wherein the process of formation of a similar calibration should not be excessively long and labor-consuming.

The proposed method allows to form a multivariate calibration model for the calibrated device steady against possible changes of one or several factors affecting its measurement results, permits not to carry out a measurement of a full set of calibration samples on the device when the specified factor or factors have altered, and it is true even in case of repeated changes. For the calibration formation the spectral data measured on the calibrated device and supplemented with the spectral data obtained as a result of the initial data transformation to the form, equivalent to measurements on the device in the state, when at least one of the measurement properties, affecting the results, is altered, for example in such way that it comprises the expected range of similar alterations for devices of the given type while in operation. The field of applicability and stability of the calibration model are analyzed on the basis of these spectral data set. As all data are kept in the computer of the calibrated device, it allows to estimate the outlier data at the analysis of unknown samples, for example by means of Mahalanobis statistics.

For the correction of the spectral data of the calibration set carried out for the purpose to take into account alterations of properties affecting the measurement results from the device, a specially selected set of samples is used, further referred to as set for calculation of correcting relationships, the number of samples in the limited set is much less than in a full calibration set, so that their properties can be unknown, it is only important that this limited set of samples provides significant variations in the measured spectral data allowing to determine the transformation expressions. For this purpose the spectrum of each sample of the set is measured on the device in the state corresponding to the measurement of the samples calibration spectra, and on the same device, when at least in one of the properties, influencing the measurement results, some alterations are carried out (the "altered" device). While realizing the received spectral data correlation, they find relationships allowing to transform the spectra measured on the device before the alteration, to the form as if the measurements were carried out on the altered device and taking into account the differences in the measurement results of the same samples, occurring owing to the alteration of one or several factors affecting the measurement results from the device. For the purpose of optimal calibration, the spectral data can be subjected to normalization which consists in carrying out identical mathematical transformations for all measured spectra. It provides a detection of obvious deviations in the spectral data measured on the device before and after the alteration, what in turn facilitate a more exact definition of expressions for the transformation of spectral data. It should be noted, that the correcting relationships found in a similar way for any device taking into account the effect of alterations of a certain property or properties on the measurement results of the device can be used on any other device of the given type for the formation of a calibration model steady against the specified alterations. The listed set of essential features allows to lower the labor input and the duration of the formation process of the calibration model steady against alterations of the properties, affecting the measurement results of the device. The calibration model for the calibrated device is formed by the initial and transformed spectral data of the given calibration set of samples using standard mathematical methods of the multivariate regression analysis (MLR, PCA, PLS, etc. [6]), in addition the outlier samples have to be excluded from the calibration, what guarantees the stability of the formed model so that the model can be used later on for the definition of unknown sample properties.

As a practical explanation of the proposed invention we shall consider the example of formation of a multivariate calibration model steady against alterations of technical parameters of the spectrometer InfraLUM FT-10 (**ИнфраЛЮМ** ФТ-10), which can occur owing to ageing, maintenance works or replacement of separate typical elements of the construction. The principle of operation of the given device is based on Fourier spectroscopy in the short-range infrared spectral region (NIR). Bread-wheat was chosen as the research object, for which basic quality parameters were defined by means of the formed calibration on the given device. We shall emphasize in addition that the samples set is only used as a practical illustration of the proposed method.

For the formation of the calibration, a representative samples set is selected, spectra of which are measured on the spectrometer. The obtained spectral data can be subjected to normalization procedure, taking into account the features of devices working in light transmission and using the principles of Fourier spectroscopy [6]. When forming the calibration models within the limits of the given research the following preprocessing was used: alignment of the baseline, spectra normalization by a root mean square deviation, calculation of average weight values [6].

As it was mentioned earlier, the type of the mathematical processing is defined in such a way that it provides minimal errors of the definition of the analyzed properties. If the spectral data are subjected to normalization procedure, the calibration relationships are defined on the basis of these data comparison with the known, which also passed the normalization, by properties of the calibration set samples, defined by referential methods.

For the assessment of the quality of the formed calibration model various statistical characteristics are used [1].

One of such parameters is the standard calibration error (SEC), which serves for the assessment of the expected co-ordination between the obtained values using the calibration model, and the values measured by the referential method.

$$SEC = \sqrt{\frac{\sum_{i=1}^{n}(\hat{y}_i - y_i)^2}{d}} \qquad (3)$$

where $\hat{y}$ is a vector of values of the defined parameters for the calibration samples obtained by using this calibration; y is a vector of referential data; d=n-k is the number of degrees of freedom of the calibration model, n is the number of the calibration samples, k is the number of variables in the calibration model, depending on the mathematical method used for the model formation.

The standard error of the cross-validation (SECV) is calculated at a cross check of the calibration model and allows to estimate its stability [1].

$$SECV = \sqrt{\frac{\sum_{i=1}^{n}(\hat{y}_i - y_i)^2}{n}} \qquad (4)$$

where $\hat{y}$ is the vector containing estimations of the cross-validation.

The standard validation error (SEV) characterizes the deviation error between the referential and the values predicted by the calibration equation for the samples of the additional set of samples not included in the calibration one.

$$SEV = \sqrt{\frac{\sum_{i=1}^{n}(\hat{y}_i - y_i)^2}{d_v}}$$

$$(5)$$

where $d_v$ is the total number of referential values of the analyzed parameter for all spectra of the additional set, $y_i$ is the referential values of the analyzed parameter for i-th spectrum of the additional set, $\hat{y}$ is the predicted values of the analyzed parameter for i-th spectrum of the additional set.

The basic statistical characteristics of the initial calibration model, formed by the samples of bread-wheat on the investigated spectrometer without an artificial alteration in the properties affecting the measurement results are shown in Table 1. Calibrations have been formed on two basic quality parameters, protein and gluten. For the definition of SEV a validation set was used, it was selected in a such way that its content of protein or gluten , respectively, was distributed at regular intervals within all range of possible values of concentration of these parameters.

Table 1. Results of the initial device calibration.

| Parameter | SEC | SECV | SEV |
|-----------|-----|------|-----|
| Protein | 0,32 | 0,41 | 0,31 |
| Gluten | 1,24 | 1,51 | 1,14 |

To create a multivariate calibration model on the spectrometer taking into account possible alterations of the properties affecting the measurement results from the device, for example deviations in technical parameters of the device occurring owing to ageing, maintenance works or replacement of separate typical elements of the construction, according to the proposed invention it is necessary to form a set of samples for calculation of the correcting relationships between the results obtained on the device in the initial state, and in the state when alterations are made. In this case, 10 samples were selected from the calibration set with the maximal and minimal values of score parameters for each of the analyzed parameters. However, we shall note, that the samples in the set for calculation of the correcting relationships generally may not belong to the calibration set.

The spectra of the selected samples were registered on the calibrated device. Then some artificial alterations were made in the construction features of the given device, for example those which are possible during maintenance of the analyzer. In particular, in the given example the replacement of a beam splitter in the interferometer by another one, the covering of which differs from the initial so much, that it causes the greatest possible deviations in the distribution of a light beam among the beam splitters of the given type. After that measurements of samples were carried out for correcting relationships calculation on the device, altered this way, and by correlation of the spectral data obtained on the device before and after the alteration, , the expressions for transformation of the measurement results were found on the device in the initial state to the form corresponding to the measurements on the device after the alteration. In the simplest form these relationships can be defined by the linear regression method.

$$R_{i,j}^s = a_i' + a_i'' R_{i,j}^m$$

$$(6)$$

where $R_{i,j}^s$ are the spectral data values measured on the device, when alterations were made in its construction (i-th wavelength, j-th sample from the set for correcting relationships calculation), $R_{i,j}^m$ are the similar spectral data measured on the device before the alteration. The spectral data can be subjected to the normalization procedure; in addition the used mathematical processing should be identical to the spectra measured on the device both, before and after the alteration. The regression factors are found for the definition of correcting relationships by the method of least squares.

$$a_i' = \left( \sum_{j=1}^{c} {R_{i,j}^m}^2 * \sum_{j=1}^{c} R_{i,j}^s - \sum_{j=1}^{c} R_{i,j}^m * R_{i,j}^s * \sum_{j=1}^{c} R_{i,j}^m \right) \bigg/ \left( c * \sum_{j=1}^{c} {R_{i,j}^m}^2 - \left( \sum_{j=1}^{c} R_{i,j}^m \right)^2 \right)$$

$$a_i'' = \left( c * \sum_{j=1}^{c} R_{i,j}^m * R_{i,j}^s - \sum_{j=1}^{c} R_{i,j}^m * \sum_{j=1}^{c} R_{i,j}^s \right) \bigg/ \left( c * \sum_{j=1}^{c} {R_{i,j}^m}^2 - \left( \sum_{j=1}^{c} R_{i,j}^m \right)^2 \right)$$

(7)

where c is the number of samples in the set for calculation of correcting relationships.

After finding the correcting relationships, using the defined regression factors $a_i'$ and $a_i''$, the spectral data for each sample from the calibration set according to the formula (6) are transformed to the form corresponding to the measurements on the device after the alteration. Further a new multivariate calibration model is formed by the set of the initial and transformed data, which is verified by means of the standard validation procedure [1], therefore its basic statistical parameters are defined.

For the check of efficiency of the proposed method various beam splitters were installed on the investigated device, and in each case the spectra of the set validation samples were registered. After that on the basis of the standard validation procedure [1] the basic statistical parameters of the initial and corrected calibration models were estimated. Table 2 presents the data for the initial calibration , and Table 3 for the corrected, steady against the influence of a beam splitter replacement.

From the given data it can be seen that the multivariate calibration model formed according to the proposed invention allows to define the properties of unknown samples with high accuracy and, in addition, it is much less sensitive to possible alterations of the device construction taken into account by means of the proposed algorithm, in this case the replacement of the beam splitter. Any other alterations of properties affecting the measurements results of the device, can be taken into account in a similar way, the example shown here is selected as an evident illustration of the proposed invention because similar changes are the most typical for spectrometers of the given type and are capable to lead to a significant decrease in accuracy of analysis for the initially formed calibration model of the device if they are not taken into account at its formation.

Table 2. Check of the initial calibration on the device with various beam splitters.

| Component | Number of beam splitter Number of the sample | ref. values | Initial | 1 | 2 | 3 | 4 |
|---|---|---|---|---|---|---|---|
| Protein | 4105 | 13,00 | 12,66 | 13,63 | 13,15 | 13,71 | 13,72 |
| | 4122 | 13,53 | 13,64 | 13,51 | 13,79 | 13,59 | 13,47 |
| | 4126 | 12,20 | 12,36 | 12,37 | 12,47 | 12,44 | 12,09 |
| | 4146 | 11,40 | 11,46 | 11,35 | 11,46 | 11,46 | 11,31 |
| | 4369 | 11,70 | 11,68 | 11,60 | 11,25 | 11,81 | 11,89 |
| | 4376 | 13,60 | 13,46 | 13,27 | 13,63 | 13,65 | 13,55 |
| | 4379 | 13,30 | 13,39 | 13,38 | 13,26 | 13,15 | 13,15 |
| | 4387 | 12,30 | 12,27 | 12,31 | 12,03 | 12,26 | 12,32 |
| | 4388 | 12,20 | 12,25 | 12,14 | 12,26 | 12,26 | 12,39 |
| | 4648 | 14,05 | 13,87 | 14,03 | 14,13 | 14,10 | 14,47 |
| | 4666 | 10,58 | 10,49 | 10,51 | 11,37 | 11,02 | 11,83 |
| | SEV | | 0,31 | 0,38 | 0,63 | 0,41 | 0,61 |
| Gluten | 4122 | 25,00 | 24,76 | 24,19 | 24,34 | 25,14 | 25,26 |
| | 4146 | 17,80 | 17,23 | 17,91 | 17,40 | 17,25 | 16,08 |
| | 4369 | 15,10 | 16,10 | 15,55 | 16,17 | 17,40 | 18;50 |
| | 4371 | 23,00 | 22,00 | 22,59 | 19,76 | 21,18 | 23,51 |
| | 4376 | 22,40 | 22,31 | 21,82 | 21,17 | 21,31 | 22,18 |

(continued)

| Component | Number of beam splitter Number of the sample | ref. values | Initial | 1 | 2 | 3 | 4 |
|---|---|---|---|---|---|---|---|
| | 4387 | 18,70 | 17,88 | 18,11 | 18,56 | 18,88 | 18,57 |
| | 4629 | 17,44 | 17,44 | 16,83 | 18,65 | 17,22 | 18,02 |
| | 4648 | 22,00 | 21,75 | 21,21 | 20,54 | 23,58 | 25,12 |
| | SEV | | 1,14 | 1,19 | 2,33 | 1,67 | 2,15 |

Table 3. Check of the calibration, corrected in view of the beam splitter replacement, on the device with various beam splitters.

| Component | Number of beam splitter Number of the sample | ref. values | Initial | 1 | 2 | 3 | 4 |
|---|---|---|---|---|---|---|---|
| Protein | 4105 | 13,00 | 13,30 | 13,39 | 13,25 | 13,41 | 13,38 |
| | 4122 | 13,53 | 13,64 | 13,54 | 13,62 | 13,64 | 13,69 |
| | 4126 | 12,20 | 12,40 | 12,46 | 12,38 | 12,28 | 12,05 |
| | 4146 | 11,40 | 11,45 | 11,44 | 11,37 | 11,33 | 11,28 |
| | 4369 | 11,70 | 11,65 | 11,49 | 11,48 | 11,58 | 11,77 |
| | 4376 | 13,60 | 13,45 | 13,25 | 13,68 | 13,58 | 13,54 |
| | 4379 | 13,30 | 13,37 | 13,36 | 13,29 | 13,11 | 13,10 |
| | 4387 | 12,30 | 12,25 | 12,27 | 12,19 | 12,27 | 12,36 |
| | 4388 | 12,20 | 12,22 | 12,20 | 12,29 | 12,20 | 12,34 |
| | 4648 | 14,05 | 13,90 | 14,19 | 13,98 | 13,99 | 14,22 |
| | 4666 | 10,58 | 10,44 | 10,44 | 11,16 | 11,09 | 11,13 |
| | SEV | | 0,28 | 0,34 | 0,38 | 10,33 | 0.37 |
| Gluten | 4122 | 25,00 | 24,65 | 24,25 | 24,29 | 25,19 | 25.00 |
| | 4146 | 17,80 | 17,03 | 17,59 | 18,12 | 17,02 | 17,53 |
| | 4369 | 15,10 | 16,38. | 15,72 | 16,00 | 16,58 | 16,99 |
| | 4371 | 23,00 | 21,90 | 22,57 | 21,62 | 21,51 | 24,11 |
| | 4376 | 22,40 | 22,17 | 21,48 | 21,32 | 21,37 | 22,64 |
| | 4387 | 18,70 | 18,22 | 18,27 | 19,10 | 18,78 | 18,55 |
| | 4629 | 17,44 | 17,26 | 17,18 | 16,66 | 17,88 | 17,25 |
| | 4648 | 22,00 | 22,07 | 21,81 | 21,43 | 22,61 | 23,41 |
| | SEV | | 1,08 | 1,12 | 1,46 | 1,38 | 1,52 |

A check has been made of the possibility to use the found correcting relationships on another device of the same model. On this device the spectra of the samples calibration set of bread-wheat, selected for the check, were registered and on the basis of the data a calibration model is formed, this model does not take into account possible properties alteration affecting the measurement results of the device.

After that, the spectral data obtained at measurement of the calibration, set of samples on the calibrated device have been corrected by the correcting relationships found earlier to the form corresponding to the device, for which the replacement of a beam splitter is carried out. According to the proposed algorithm, the calibration model was formed by the set of the initial and corrected spectral data of the calibration samples of the device.

For the check of efficiency of the proposed method on the calibrated device, various beam splitters were installed, and in each case the spectra of the samples validation set were registered. After that on the basis of the standard validation procedure [1] the basic statistical parameters of the initial calibration model formed for the given device, and the calibration models, steady against beam splitter replacement effect, on the basis of the correcting relationships, calculated earlier for another device, were estimated. The obtained data are shown in Tables 4 and 5, respectivly.

Table 4. Calibration check of the second device on the device a different beam splitters.

| Component | Number of beam splitter/Num ber of samples | ref. value | Initial | 1 | 2 | 3 | 4 |
|---|---|---|---|---|---|---|---|
| Protein | 4105 | 13,00 | 13,02 | 12,80 | 12,61 | 12,73 | 13,18 |
|  | 4116 | 15,70 | 15,34 | 15,21 | 15,05 | 15,27 | 15,23 |
|  | 4118 | 14,00 | 14,05 | 13,88 | 13,70 | 13,96 | 14,03 |
|  | 4122 | 13,53 | 13,59 | 13,54 | 13,67 | 13,45 | 13,37 |
|  | 4126 | 12,20 | 12,31 | 12,44 | 12,22 | 12,26 | 12,24 |
|  | 4146 | 11,40 | 11,12 | 11,40 | 11,46 | 11,42 | 11,18 |
|  | 4172 | 13,20 | 13,30 | 13,31 | 13,09 | 13,17 | 13,09 |
|  | SEV |  | 0,28 | 0,37 | 0,41 | 0,38 | 0,37 |
| Gluten | 4105 | 19,80 | 20,68 | 21,44 | 20,80 | 21,29 | 21,02 |
|  | 4116 | 24,20 | 24,71 | 25,06 | 24,83 | 24,15 | 24,40 |
|  | 4118 | 23,32 | 23,44 | 23,56 | 23,66 | 22,95 | 23,78 |
|  | 4122 | 25,00 | 25,16 | 25,15 | 24,95 | 25,28 | 25,21 |
|  | 4126 | 16,60 | 16,75 | 17,08 | 17,10 | 17,11 | 16,93 |
|  | 4146 | 17,80 | 16,71 | 17,90 | 17,36 | 17,35 | 17,00 |
|  | 4172 | 20,50 | 20,56 | 20,55 | 20,84 | 20,51 | 20,18 |
|  | SEV |  | 0,96 | 1,19 | 1,03 | 0,93 | 1,01 |

Table 5. Check of the calibration corrected in view of the beam splitter replacement by the corrective relationships, determined for another device, on the calibrated device with various beam splitters

| Component | Number of beam splitter/Number of samples | ref. value | Initial | 1 | 2 | 3 | 4 |
|---|---|---|---|---|---|---|---|
| Protein | 4105 | 13,00 | 13,04 | 12,91 | 12,78 | 12,86· | 12,95 |
|  | 4116 | 15,70 | 15,47 | 15,38 | 15,20 | 15,42, | 15,54 |
|  | 4118 | 14,00 | 14,04 | 14,05 | 13,84 | 13.90 | 14,00 |
|  | 4122 | 13,53 | 13,72 | 13,58 | 13,36 | 13,49 | 13,60 |
|  | 4126 | 12,20 | 12,08 | 12,16 | 12,16 | 12,06 | 12,39 |
|  | 4146 | 11,40 | 11,01 | 11,25 | 11,25 | 11,45 | 11,38 |
|  | 4172 | 13,20 | 13,30 | 13,31 | 13,13 | 13,20 | 13,33 |
|  | SEV |  | 0,27 | 0,30 | 0,32 | 0,31 | 0,30 |
| Gluten | 4105 | 19,80 | 19,97 | 20,83 | 20,16 | 20,77 | 21,04 |
|  | 4116 | 24,20 | 24,64 | 24,85 | 24,70 | 23,98 | 24,29 |
|  | 4118 | 23,32 | 23,43 | 23,30 | 23,83 | 22,93 | 22,99 |
|  | 4122 | 25,00 | 24,93 | 25,15 | 24,84 | 25,39 | 25,31 |
|  | 4126 | 16,60 | 16,81 | 17,48 | 17,23 | 17,25 | 17,29 |

(continued)

| Component | Number of beam splitter/Number of samples | ref. value | Initial | 1 | 2 | 3 | 4 |
|---|---|---|---|---|---|---|---|
| | 4146 | 17,80 | 16,65 | 17,78 | 17,57 | 17,17 | 17,22 |
| | 4172 | 20,50 | 20,48 | 20,41 | 20,99 | 20,96 | 20,72 |
| | SEV | | 0,94 | 1,06 | 0,92 | 0,86 | 0,93 |

The results of Tables 4 and 5 confirm the possibility to use the correcting relationships defined for any device and considering the effect of its parameters or other properties alterations affecting the measurement results, on any other device of the given series during formation of calibration models steady against the specified alterations. The given feature allows, after the formation of the calibration model according to the proposed method, compensating deviations affecting the measurement results of a certain property or properties, for example, of technical parameters of the device, which alterations occur owing to ageing, maintenance works or replacement of separate typical elements of theconstruction for a device, further it is possible to use the found correcting relationships for all other devices of the given type for formation of calibration models taking into account the respective alterations of the influencing properties by means of the given correction relationships. In that case there is no necessity to choose and carry out measurements of set of samples for calculation of correcting relationships for all other devices, except for the first as the spectral data received at calibration samples registration on other devices will be mathematically transformed with the use of the found correcting relationships to the form corresponding to the device, when some alterations are made to one or several properties affecting the measurement results.

In the conclusion we shall note once again, that the scope of the proposed method is not limited to spectroscopy. The proposed invention can be used for various devices, defining some properties of the sample on the basis of repeated measurement of other properties.

Sources of information

1. ASTM standard, E 1655 - 00, Practices for Infrared Multivariate Quantitative Analysis.
2. Patent application USA 4 944 589, IPC G01J 3/18, published on 31. 07. 1990
3. Patent application USA 6 615 151, IPC G01 N 015/06, published on 02. 09. 2003
4. Patent application WO 02/25233 A2, IPC G01N021/27E published on 28.03.2002
5. Russian patent application No 2266523 C1, IPC 7: G01 N 021/01, published on 20.12.2005
6. Operating manual InfraLUM FT-10, 152.00.00.00.RE.
7. De Noord et al.: "Multivariate calibration standardization", Chemometrics and Intelligent Laboratory Systems, vol. 25, no. 2, 1 November 1994, pages 85-97

**Claims**

1. A method of formation of multivariate calibration models being steady against changes of properties being external conditions and/or measuring device characteristics and affecting measurement results from the measuring device, the method comprising

- selecting a calibration set of samples with known secondary properties, wherein the secondary properties are the sample properties to be analyzed;
- measuring primary properties of each of the samples of the calibration set on the measuring device, wherein the primary properties are the sample properties to be directly measured;
- carrying out artificial alterations of at least one of the properties affecting the measurement results of the measuring device;
- measuring the primary properties of at least one sample on the measuring device in a state altered this way ,
- forming a limited sample set for calculation of correcting relationships before carrying out the alterations, wherein the limited sample set consists of a much smaller number of samples than the calibration set, and wherein the samples are selected to provide essential distinctions in the measurement results in the range of all primary properties on the measuring device, both in the initial and in the altered state;
- measuring the primary properties of each sample from this set on the measuring device before and after carrying out the alterations,

**characterized by**

- defining the correcting relationships by means of comparing the measurement results of the primary properties of the samples of the limited set obtained on the measuring device before carrying out the alterations with the measurement results of the primary properties of the same samples obtained on the measuring device in the state when the alterations are made, wherein this comparison is carried out using multivariate regression analysis methods;
- transforming the measurement results of the primary properties of the samples of the calibration set by means of the obtained correcting relationships to a form corresponding to the form of measurements on the measuring device after the alterations;
- complementing the measurement results of the primary properties of the calibration samples being obtained on the measuring device before the alterations to the primary properties measurement results of the samples of the calibration set being corrected to the altered state of the measuring device as mentioned above;
- calculating the multivariate calibration model based on a set of the initial and corrected measurement results of the primary properties of the samples of the calibration set; and
- carrying out verification of the multivariate calibration model, defining thereby quantitative parameters of the calibration validation, namely, at least one of the standard calibration error, the standard validation error and the standard cross-validation error.

2. The method of claim 1, **characterized in that**, by comparing by means of methods of the multivariate regressive analysis the measurement results of the primary properties of the samples of the limited set for the calculation of the correcting relationships obtained on the measuring device before carrying out the alteration with the measurement results of the primary properties of the same samples obtained on the measuring device in the state when the alterations are made, the measurement results of the samples obtained on the measuring device both before and after the alterations are preliminarily subjected to a normalization procedure, revealing differences in the measurement results of the samples of the limited set for the calculation of the correcting relationships depending on the alterations, whereby, when transforming the measurement results of the primary properties of the samples of the calibration set by means of the obtained correcting relationships to the form corresponding to the measurements on the measuring device after the alteration, the measurement results of the samples of the calibration set obtained are preliminarily subjected to just the same procedure of normalization on the measuring device before the alterations.

3. The method of claim 1, **characterized in that** the samples characterizing existing range of differences in the primary properties obtained on the calibrated measuring device both before and after the alterations, are selected for the limited set for correcting relationships calculation.

4. The method of claim 1, **characterized in that** the samples the properties of which characterize the existing range of changes of the secondary properties of the samples are selected for the limited set for calculation of the correcting relationships.

5. The method of claim 1, **characterized in that** in a case when the found quantitative parameters of the calibration validation do not comply with prescribed accuracy criteria during the verification of the multivariate calibration model formed by the set of initial and corrected measurement results of the primary properties of the samples of the calibration set, a set of initial and corrected measurement results of the primary properties of the samples of the calibration set is analyzed for the presence of outlier data by means of outliers prediction statistics and the outlier samples are excluded from the calibration set before a definition of the calibration relationships.

6. The method of claim 1, **characterized in that** in a case when the found quantitative parameters of the calibration validation do not comply with prescribed accuracy criteria during the verification of the multivariate calibration model formed by the set of the initial and corrected measurement results of the primary properties of the samples of the calibration set, the set of the initial and corrected measurement results of the primary properties of the calibration set and/or the corresponding known secondary properties of the calibration samples are subjected to the normalization procedure.

7. The method of claim 1, **characterized in that** the formed multivariate calibration model provides a linear interrelation between the primary and the secondary properties.

8. The method of claim 1, **characterized in that** the formed multivariate calibration model provides a non-linear interrelation between the primary and the secondary properties.

9. The method of claim 1, **characterized in that** a spectrometer is used as a calibrated measuring device, wherein the primary properties are measurement results of spectral characteristics of the sample describing absorption, reflection or scattering of light at different values of wave numbers.

**Patentansprüche**

1. Verfahren zur Bildung multivariater Kalibrationsmodelle, die beständig gegen Änderungen von Eigenschaften sind, die äußere Bedingungen und/oder Messgerätkennwerte sind und Messergebnisse von dem Messgerät beeinflussen, wobei das Verfahren umfasst

- Auswählen eines Kalibrationssatzes von Proben mit bekannten sekundären Eigenschaften, wobei die sekundären Eigenschaften die zu analysierenden Probeneigenschaften sind;
- Messen primärer Eigenschaften von jeder der Proben des Kalibrationssatzes an dem Messgerät, wobei die primären Eigenschaften die direkt zu messenden Probeneigenschaften sind;
- Durchführen künstlicher Abänderungen wenigstens einer der Eigenschaften, die die Messergebnisse von dem Messgerät beeinflussen;
- Messen der primären Eigenschaften wenigstens einer Probe an dem Messgerät in einem auf diese Weise abgeänderten Zustand;
- Bilden eines limitierten Probensatzes zur Berechnung von Korrekturbeziehungen vor Durchführung der Abänderungen, wobei der limitierte Probensatz aus einer viel kleineren Anzahl von Proben besteht als der Kalibrationssatz und wobei die Proben so ausgewählt werden, dass sie wesentliche Unterscheidungen in den Messergebnissen im Bereich aller primärer Eigenschaften an dem Messgerät, sowohl in dem anfänglichen als auch in dem abgeänderten Zustand, bereitstellen;
- Messen der primären Eigenschaften jeder Probe aus diesem Satz an dem Messgerät vor und nach Durchführen der Abänderungen;

**gekennzeichnet durch**

- Definieren der Korrekturbeziehungen mittels Vergleichen der Messergebnisse der primären Eigenschaften der Proben des limitierten Satzes, die vor Durchführen der Abänderungen an dem Messgerät erhalten wurden, mit den Messergebnissen der primären Eigenschaften der gleichen Proben, die an dem Messgerät in dem Zustand, wenn die Abänderungen erfolgt sind, erhalten wurden, wobei dieser Vergleich unter Verwendung von Verfahren zur multivariaten Regressionsanalyse durchgeführt wird;
- Umformen der Messergebnisse der primären Eigenschaften der Proben des Kalibrationssatzes mittels der erhaltenen Korrekturbeziehungen in eine Form, die der Form der Messungen an dem Messgerät nach den Abänderungen entspricht;
- Ergänzen der Messergebnisse der primären Eigenschaften der Kalibrationsproben, die vor den Abänderungen an dem Messgerät erhalten wurden, zu den Messergebnissen der primären Eigenschaften der Proben des Kalibrationssatzes, die zu dem abgeänderten Zustand des Messgeräts korrigiert worden sind, wie oben erwähnt;
- Berechnen des multivariaten Kalibrationsmodells basierend auf einem Satz der anfänglichen und korrigierten Messergebnisse der primären Eigenschaften der Proben des Kalibrationssatzes; und
- Durchführen einer Verifizierung des multivariaten Kalibrationsmodells, wodurch quantitative Parameter der Kalibrationsvalidierung definiert werden, nämlich der Standardkalibrierungsfehler, der Standardvalidierungsfehler und/oder der Standardkreuzvalidierungsfehler.

2. Verfahren nach Anspruch 1, **dadurch gekennzeichnet, dass** durch Vergleichen der Messergebnisse der primären Eigenschaften der Proben des limitierten Satzes für die Berechnung der Korrekturbeziehungen, die vor Durchführung der Abänderung an dem Messgerät erhalten wurden, mit den Messergebnissen der primären Eigenschaften der gleichen Proben, die an dem Messgerät in dem Zustand, wenn die Abänderungen erfolgt sind, erhalten wurden, mittels Verfahren der multivariaten Regressionsanalyse die Messergebnisse der Proben, die an dem Messgerät sowohl vor als auch nach den Abänderungen erhalten wurden, vorher einer Normalisierungsprozedur unterzogen werden, die Unterschiede in den Messergebnissen der Proben des limitierten Satzes für die Berechnung der Korrekturbeziehungen in Abhängigkeit von den Abänderungen offenbart, wodurch beim Umformen der Messergebnisse der primären Eigenschaften der Proben des Kalibrationssatzes mittels der erhaltenen Korrekturbeziehungen zu der den Messungen an dem Messgerät nach der Abänderung entsprechenden Form, die erhaltenen Messergebnisse der Proben des Kalibrationssatzes vorher genau der gleichen Normalisierungsprozedur an dem Messgerät vor den Abänderungen unterzogen werden.

**3.** Verfahren nach Anspruch 1, **dadurch gekennzeichnet, dass** die Proben, die die vorhandene Spanne an Unterschieden in den primären Eigenschaften charakterisieren, die an dem kalibrierten Messgerät sowohl vor als auch nach den Abänderungen erhalten wurden, für den limitierten Satz zur Berechnung von Korrekturbeziehungen ausgewählt werden.

**4.** Verfahren nach Anspruch 1, **dadurch gekennzeichnet, dass** die Proben, deren Eigenschaften die vorhandene Spanne an Unterschieden der sekundären Eigenschaften der Proben charakterisieren, für den limitierten Satz zur Berechnung von Korrekturbeziehungen ausgewählt werden.

**5.** Verfahren nach Anspruch 1, **dadurch gekennzeichnet, dass** falls während der Verifizierung des multivariaten Kalibrationsmodells, das durch den Satz aus anfänglichen und korrigierten Messergebnissen der primären Eigenschaften der Proben des Kalibrationssatzes gebildet wurde, die gefundenen quantitativen Parameter der Kalibrationsvalidierung den vorgeschriebenen Genauigkeitskriterien nicht genügen, ein Satz von anfänglichen und korrigierten Messergebnissen der primären Eigenschaften der Proben des Kalibrationssatzes mittels Ausreißervorhersagestatistiken auf das Vorhandensein von Ausreißerdaten analysiert wird und die Ausreißerproben vor einer Definierung der Kalibrierungsbeziehungen aus dem Kalibrationssatz ausgeschlossen werden.

**6.** Verfahren nach Anspruch 1, **dadurch gekennzeichnet, dass** falls während der Verifizierung des multivariaten Kalibrationsmodells, das durch den Satz aus anfänglichen und korrigierten Messergebnissen der primären Eigenschaften der Proben des Kalibrationssatzes gebildet wurde, die gefundenen quantitativen Parameter der Kalibrationsvalidierung den vorgeschriebenen Genauigkeitskriterien nicht genügen, der Satz aus den anfänglichen und korrigierten Messergebnissen der primären Eigenschaften des Kalibrationssatzes und/oder die entsprechenden bekannten sekundären Eigenschaften der Kalibrationsproben der Normalisierungsprozedur unterzogen werden.

**7.** Verfahren nach Anspruch 1, **dadurch gekennzeichnet, dass** das gebildete multivariate Kalibrationsmodell eine lineare Wechselbeziehung zwischen den primären und den sekundären Eigenschaften bereitstellt.

**8.** Verfahren nach Anspruch 1, **dadurch gekennzeichnet, dass** das gebildete multivariate Kalibrationsmodell eine nicht-lineare Wechselbeziehung zwischen den primären und den sekundären Eigenschaften bereitstellt.

**9.** Verfahren nach Anspruch 1, **dadurch gekennzeichnet, dass** als kalibriertes Messgerät ein Spektrometer verwendet wird, wobei die primären Eigenschaften Messergebnisse für spektrale Kennwerte der Probe sind, die die Absorption, Reflexion oder Streuung von Licht bei verschiedenen Wellenzahlwerten beschreiben.

## Revendications

**1.** Procédé de formation de modèles d'étalonnage à plusieurs variables étant stables vis-à-vis de changements de propriétés étant des conditions externes et/ou des caractéristiques de dispositif de mesure et affectant des résultats de mesure provenant du dispositif de mesure, le procédé comprenant

- la sélection d'un ensemble d'échantillons d'étalonnage avec des propriétés secondaires connues, dans lequel les propriétés secondaires sont les propriétés d'échantillon devant être analysées ;
- la mesure de propriétés principales de chacun des échantillons de l'ensemble d'étalonnage sur le dispositif de mesure, dans lequel les propriétés principales sont les propriétés d'échantillon devant être directement mesurées ;
- l'exécution d'altérations artificielles d'au moins une des propriétés affectant les résultats de mesure du dispositif de mesure ;
- la mesure des propriétés principales d'au moins un échantillon sur le dispositif de mesure dans un état altéré de cette manière ,
- la formation d'un ensemble limité d'échantillons pour un calcul de relations de correction avant l'exécution des altérations, dans lequel l'ensemble limité d'échantillons consiste en un nombre beaucoup plus petit d'échantillons que l'ensemble d'étalonnage, et dans lequel les échantillons sont choisis de façon à fournir des distinctions essentielles dans les résultats de mesure dans la plage de toutes les propriétés principales sur le dispositif de mesure, à la fois dans l'état initial et dans l'état altéré ;
- la mesure des propriétés principales de chaque échantillon de cet ensemble sur le dispositif de mesure avant et après l'exécution des altérations,

**caractérisé par**

- la définition des relations de correction au moyen d'une comparaison des résultats de mesure des propriétés principales des échantillons de l'ensemble limité obtenus sur le dispositif de mesure avant l'exécution des altérations avec les résultats de mesure des propriétés principales des mêmes échantillons obtenus sur le dispositif de mesure dans l'état où les altérations sont exécutées, dans lequel cette comparaison est effectuée en utilisant des procédés d'analyse de régression à plusieurs variables ;
- la transformation des résultats de mesure des propriétés principales des échantillons de l'ensemble d'étalonnage au moyen des relations de correction obtenues en une forme correspondant à la forme de mesures sur le dispositif de mesure après les altérations ;
- la complémentation des résultats de mesure des propriétés principales des échantillons d'étalonnage étant obtenus sur le dispositif de mesure avant les altérations des propriétés principales, les résultats de mesure des échantillons de l'ensemble d'étalonnage étant corrigés à l'état altéré du dispositif de mesure comme mentionné ci-dessus ;
- le calcul du modèle d'étalonnage à plusieurs variables sur la base d'un ensemble des résultats de mesure initiaux et corrigés des propriétés principales des échantillons de l'ensemble d'étalonnage ; et
- l'exécution d'une vérification du modèle d'étalonnage à plusieurs variables, définissant ainsi des paramètres quantitatifs de la validation d'étalonnage, à savoir au moins une parmi l'erreur type d'étalonnage, l'erreur type de validation et l'erreur type de validation croisée.

2. Procédé selon la revendication 1, **caractérisé en ce que**, en comparant au moyen des procédés de l'analyse de régression à plusieurs variables les résultats de mesure des propriétés principales des échantillons de l'ensemble limité pour le calcul des relations de correction obtenus sur le dispositif de mesure avant l'exécution de l'altération avec les résultats de mesure des propriétés principales des mêmes échantillons obtenus sur le dispositif de mesure dans l'état où les altérations sont effectuées, les résultats de mesure des échantillons obtenus sur le dispositif de mesure à la fois avant et après les altérations sont préliminairement soumis à une procédure de normalisation, révélant des différences dans les résultats de mesure des échantillons de l'ensemble limité pour le calcul des relations de correction en fonction des altérations, d'où il résulte que, lors de la transformation des résultats de mesure des propriétés principales des échantillons de l'ensemble d'étalonnage au moyen des relations de correction obtenues à la forme correspondant aux mesures sur le dispositif de mesure après l'altération, les résultats de mesure des échantillons de l'ensemble d'étalonnage obtenus sont préliminairement soumis à exactement la même procédure de normalisation sur le dispositif de mesure avant les altérations.

3. Procédé selon la revendication 1, **caractérisé en ce que** les échantillons caractérisant une plage existante de différences dans les propriétés principales obtenues sur le dispositif de mesure étalonné à la fois avant et après les altérations, sont choisis pour l'ensemble limité pour le calcul de relations de correction.

4. Procédé selon la revendication 1, **caractérisé en ce que** les échantillons dont les propriétés caractérisent la plage existante de changements des propriétés secondaires des échantillons sont choisis pour l'ensemble limité pour le calcul des relations de correction.

5. Procédé selon la revendication 1, **caractérisé en ce que**, dans un cas où les paramètres quantitatifs trouvés de la validation d'étalonnage ne sont pas conformes à des critères de précision prescrits lors de la vérification du modèle d'étalonnage à plusieurs variables formé par l'ensemble de résultats de mesure initiaux et corrigés des propriétés principales des échantillons de l'ensemble d'étalonnage, un ensemble de résultats de mesure initiaux et corrigés des propriétés principales des échantillons de l'ensemble d'étalonnage est analysé pour la présence de données aberrantes au moyen de statistiques de prédiction de données aberrantes et les échantillons aberrants sont exclus de l'ensemble d'étalonnage avant une définition des relations d'étalonnage.

6. Procédé selon la revendication 1, **caractérisé en ce que**, dans un cas où les paramètres quantitatifs trouvés de la validation d'étalonnage ne sont pas conformes à des critères de précision prescrits lors de la vérification du modèle d'étalonnage à plusieurs variables formé par l'ensemble des résultats de mesure initiaux et corrigés des propriétés principales des échantillons de l'ensemble d'étalonnage, l'ensemble des résultats de mesure initiaux et corrigés des propriétés principales de l'ensemble d'étalonnage et/ou des propriétés secondaires connues correspondantes des échantillons d'étalonnage sont soumis à la procédure de normalisation.

7. Procédé selon la revendication 1, **caractérisé en ce que** le modèle d'étalonnage à plusieurs variables formé offre une interrelation linéaire entre les propriétés principales et secondaires.

8. Procédé selon la revendication 1, **caractérisé en ce que** le modèle d'étalonnage à plusieurs variables formé offre une interrelation non linéaire entre les propriétés principales et secondaires.

9. Procédé selon la revendication 1, **caractérisé en ce qu'**un spectromètre est utilisé comme un dispositif de mesure étalonné, dans lequel les propriétés principales sont des résultats de mesure de caractéristiques spectrales de l'échantillon décrivant une absorption, une réflexion ou une diffusion de lumière à différentes valeurs de nombres d'ondes.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4944589 A
- US 6615151 A
- WO 0225233 A2
- RU 2266523 C1

**Non-patent literature cited in the description**

- **DE NOORD et al.** Multivariate calibration standardization. *Chemometrics and Intelligent Laboratory Systems,* 01 November 1994, vol. 25 (2), 85-97